# EUROPEAN PATENT SPECIFICATION

(11) **EP 3 319 146 B1**
(45) Date of publication and mention of the grant of the patent: **17.10.2018**
(21) Application number: 16197347.4
(22) Date of filing: 04.11.2016
(51) Int. Cl.: H01M 2/10, H01M 2/12, H01M 10/613

(54) **BATTERY SYSTEM**
BATTERIESYSTEM
SYSTÈME DE BATTERIE

(43) Date of publication of application: 09.05.2018
(73) Proprietor: Samsung SDI Co., Ltd., Giheung-gu Yongin-si, Gyeonggi-do 17084 (KR)
(72) Inventor: GOLUBKOV, Andrej, 8010 Graz (AT)
(74) Representative: Gulde & Partner

(56) References cited:
- US-A1- 2010 276 120
- US-A1- 2014 154 541
- US-A1- 2014 335 386

## Description

### Field of the Invention

The present invention relates to a battery system, and particularly to a battery system comprising a battery cover that is configured for preventing thermal runaway propagation.

### Technological Background

A rechargeable or secondary battery differs from a primary battery in that it can be repeatedly charged and discharged, while the latter provides only irreversible conversion of chemical energy to electrical energy. Low-capacity rechargeable batteries are used as power supplies for small electronic devices, such as cellular phones, notebook computers and camcorders, while high-capacity rechargeable batteries are used as power supplies for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. The battery management functions can then be at least partially realized on either module or submodule level and thus interchangeability can be improved. One or more battery modules are mechanically and electrically integrated, equipped with a thermal management system and set up for communication with one or more electrical consumers in order to form a battery system.

The mechanical integration of a battery system requires appropriate mechanical connection of the individual components, e.g. of battery submodules among themselves and with structures of a system providing the electrical consumers, e.g. a vehicle. These connections must be designed to remain functional and safe during the average service life of the battery system and under the stresses provided during use of the consumers. Further, installation space and interchangeability requirements must be met, especially in mobile applications.

Mechanical integration of battery modules can be achieved by providing a carrier plate, e.g. a ground plate, and by positioning individual battery cells or submodules thereon. Fixing the battery cells or submodules can be achieved by fitted depressions in the carrier plate, by mechanical interconnectors such as bolts or screws or by confining the cells or submodules. Confinement can be achieved by fastening side plates to lateral sides of the carrier plate and/or by providing a further carrier plate atop and fixing it to the first carrier plate and/or side plates. Thus, multilevel battery modules can be constructed, wherein the carrier plates and/or side plates may contain coolant ducts for providing cooling of the cells or submodules.

Mechanical integration of battery submodules can be achieved by providing mechanically reinforced electrical connectors or by fastening the battery cells onto carrier beams or struts in addition to the electrical connectors. Additionally or alternatively the submodules can be arranged in individual casings covering some or all of the surfaces of a battery submodule and arranged into a battery module, e.g. onto a carrier plate, within these individual casings.

To provide electrical integration of a battery system in modular designs either submodules with a plurality of cells connected in parallel are connected in series (*XsYp*) or submodules with a plurality of cells connected in series are connected in parallel (*XpYs*)*. XsYp* type submodules can generate high voltages but the voltage level of each cell hast to be controlled individually and thus wiring complexity is increased. In *XpYs* type submodules the voltage levels of the cells connected in parallel are automatically balanced. Thus it is sufficient to control the voltage on a submodule level and wiring complexity is reduced. In submodules of cells connected in parallel the capacitance of the cells add up and thus *XpYs* type submodules are mostly used for low capacitance cells.

For meeting the dynamic power demands of various electrical consumers connected to the battery system, static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers. Battery systems usually comprise a battery management system for processing this information.

To provide thermal control of a battery system a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable battery deteriorates and the life-span of the rechargeable battery is shortened. Thus, cooling devices for effectively emitting/discharging/dissipating heat from the cells are required.

An example of such abnormal operation condition is thermal runaway of a battery cell that may be entered by strongly overheated or overcharged lithium ion cells. The critical temperature for transiting into thermal runaway is typically above 150°C and may be exceeded due to a local failure, such as an internal short circuit of a cell, heating from a bad electrical contact or a short circuit to an adjacent cell. The thermal runaway is a self-accelerating chemical reaction inside the cell, which produces high amounts of heat and gas, until all available material is exhausted. During thermal runaway, the failed cell may heat up to cell temperatures higher than 700°C and may eject large quantities of hot gas into the battery system. Thus large amounts of heat can be dissipated to adjacent cells. As these neighboring cells already receive heat due to heat conduction via side plates, the base plate and/or their electrical connectors they are prone to transit into thermal runaway as well. In other words, convective heat transfer to adjacent cells increases the risk of thermal runaway propagation. The result may be a propagation of the thermal runaway through the whole battery module and eventually a battery fire and/or the total loss of an electric vehicle.

According to the prior art, battery systems may comprise exhaust compartments for receiving the ejected gas that might be secured, e.g. by check valves, for preventing backflow of the ejected gas into a battery cell compartment or for preventing the ejected gas from flowing into a passenger compartment. However, such exhaust compartments usually require additional volume and thus decrease the power per unit volume ratio of the battery system.

US2014/0154541A1 discloses battery with a plurality of densely packed cylindrical battery cells aligned in y-direction and diagonally, each with a vent hole on its upper side. A cover comprises a fin shaped portion with concave and convex shaped portions alternating in the x-direction. Hence, rigid fins are formed in cover in the y-direction. US20140335386A1 discloses a battery with a plurality of aligned prismatic battery cells, each with a safety valve. A bus bar module is arranged on the battery and comprises a gas discharge duct forming a discharge gas path along the alignment direction of the battery cells. Thermal influence of the ejected gas perpendicular to the cell's alignment direction is suppressed by flow direction changing members. US20100276120A1 discloses a battery cover with coolant ducts.

It is an object of the present invention to overcome or reduce at least some of the drawbacks of the prior art and to provide a battery system with improved discharge of hot gases ejected from a battery cell and with improved protection against propagation of an abnormal operation condition, such as a thermal runaway, through the battery system.

### Summary of the Invention

Further aspects of the present invention will be apparent from the dependent claims, the attached drawings and/or the following description of the attached drawings.

According to the present invention a battery system is provided, comprising a plurality of battery modules that are arranged apart from each other in the second direction. Each battery module comprises a plurality of aligned battery cells that are arranged in a first direction. Each of the battery cells comprises an electrode assembly that is accommodated in a battery case and a cap assembly that is placed on the battery case for closing the battery case. A vent hole is provided within the cap assembly, wherein the vent hole is configured for ejecting gas at least in an abnormal operation condition of the battery cell, e.g. during thermal runaway. Further, a battery system cover for covering the at least one plurality of aligned battery cells is provided. In other words, the battery case cover may provide a lid for the battery system.

The battery system cover comprises a plurality of ridges that are spaced apart from each other in the second direction. Each of the ridges extends in the first direction and is aligned with the vent holes of one of the battery modules, i.e. of the plurality of aligned battery cells of the battery module. Thus, each of the ridges is configured for deflecting a gas jet that is ejected from a battery cell of one of the battery modules perpendicular to the length direction of the battery module and towards a neighboring battery module. Thus, the thermal energy of a malfunctioning battery cell can be distributed over the battery system. Further, the plurality of ridges extending along the battery system cover further provides improved mechanical stability of the cover.

Each ridge is disposed on a lower side of the battery system cover that is facing the pluralities of aligned battery cells. In other words, each ridge protrudes downwardly from the lower side of the battery system cover. The ridges extends in (or along) the first direction and are aligned with the vent holes of one of the at least one plurality of aligned battery cells. The ridges are configured for deflecting gas that is ejected from a vent hole into a second direction that is substantially perpendicular to the first direction. The second direction preferably encloses an angle between 85° and 95° with the first direction. Further preferred, the first direction and second direction are perpendicular to each other.

In other words, the present invention provides an improved battery system cover, comprising ridges that are geometrically formed to deflect gases in a direction that is different from an alignment direction (first direction) of the battery cells in the battery system. Batteries that are aligned in the alignment direction within the battery system may be in direct contact with each other and are arranged with less distance from each other than battery cells that are not aligned in the alignment direction. Heat transfer between adjacent cells that are aligned in the alignment direction occurs via heat conduction through direct contact of the cells, heat conduction through the base plate and heat conduction through electrical interconnectors, e.g. metal busbars. Due to the small distance between battery cells arranged in the alignment direction heat transport to adjacent cell in this direction is particularly high.

If a battery cell ejects gas it is usually in an abnormal operation condition and the gas is ejected from the battery cell with high temperatures and high velocities. In cells with a high energy density of approximately 200 Wh/kg typical gas temperatures are 700°C and typical gas velocities are 300 m/s. Thus a gas jet is emitted by the vent hole of the battery cell and targets a space directly above the vent hole. If a battery system cover is arranged above the vent hole of the battery cell the cover will deflect the gas. Usual battery system covers deflect the gas uniformly in all directions and thus a significant part of the hot gas may be deflected from the battery cover towards adjacent battery cells that are aligned with the ejecting battery cell in the alignment direction. The convective heat transfer by the hot gas adds an additional thermal burden to these already endangered adjacent cells and thus increases the risk of thermal runaway propagation.

According to the present invention, the ejected gas is deflected in a direction substantially perpendicular to the alignment direction and thus towards battery cells that are not aligned with the ejecting battery cell and thus are not in such close contact with the ejecting battery cell. Thereby the amount of ejected gas which hits the adjacent cells arranged in the alignment direction and thus the thermal burden of the adjacent cells are reduced and thermal energy is distributed more evenly throughout the battery system. Due to this heat distribution, cells adjacent to the ejecting cell in an alignment direction may stay below the critical temperature at all times and thus the propagation of the thermal runaway may be reduced. Further, the thickness of the battery system cover above the vent holes and thus its melting resistance where it might be hit by the gas jet is increased. Thus, the danger of a burn through of the cover is reduced and its mechanical stability and pressure tightness is increased.

According to a preferred embodiment of the battery system according to the present invention, the vent holes of the at least one plurality of aligned battery cells are aligned in the first direction. In other words, the vent holes of all battery cells of a plurality of aligned battery cells are arranged on or close to a straight line connecting a plurality of the vent holes. A ridge is then aligned to the vent holes as it extends substantially parallel to that straight line. Further preferred, the at least one ridge is arranged at a distance from the vent holes in a third direction that is substantially perpendicular to the first direction and to the second direction. Particularly preferred, the first direction and second direction are directions in the x-y-plane and the third direction corresponds to the z-direction or the height above the x-y-plane. In other words, the at least one ridge is arranged at a distance above the vent holes. Thus, a gap between the cover and the battery cells for convection of ejected gas in a direction perpendicular to the first direction is ensured. Herein, the arrangement or alignment of the at least one ridge relative to the battery cells, refers to a battery system cover that is arranged on the battery system for covering the at least one plurality of aligned battery cells, i.e. to a battery system cover in an installation position.

In a particularly preferred embodiment of the battery system according to the present invention, the at least one ridge is tapered towards the battery cells in a cross section along the second direction. In other words, a cross section of the at least one ridge perpendicular to a length extension of the ridge is wider near a plane section of the battery system cover and is narrower further away from the plane section of the cover. Thus, a tip of the at least one ridge is pointing inside the battery system and towards the plurality of battery cells, particularly to a vent hole of a battery cell directly below the ridge. The ridge further comprises a first ridge flank extending from the tip towards the plane section of the battery system cover and a second ridge flank extending from the tip towards the plane section of the cover. The first ridge flank and the second ridge flank enclose an angle and may meet in the tip of the ridge.

Further preferred, the first ridge flank is configured for deflecting gas ejected from a vent hole in the second direction and the second ridge flank is configured for deflecting gas ejected from the vent hole in a direction opposite to the second direction. In other words, the ejected gas is parted at the at least one ridge and parts of it are deflected in opposing directions. Thereby the amount of heat that is convectively transported to each side of the plurality of aligned battery cells is reduced and thus distributed over a larger amount of battery cells. Particularly preferred, the at least one ridge comprises a substantially triangular shape in a cross section along the second direction. Alternatively the cross section along the second direction may be trapezoidal. Further preferred, the first ridge flank and the second ridge flank each comprise a concave shape in a cross section along the second direction. Particularly, the concave flanks may form a triangle with the undermost corner of the triangle being the tip of the ridge. By providing flanks with a concave shape, the deflection and redirection of the ejected gas may be smooth with little force transmitted from the gas jet onto the cover.

In another preferred embodiment of the present invention, the at least one ridge is further configured to cool gas ejected from a vent hole of a battery cell. The ridge is the first feature of the battery system that is hit by the gas jet. Thus, cooling the gas jet at the ridge may further reduce the amount of heat that is distributed across the battery system. Preferably the ridge is configured to cool gas ejected from the vent hole by comprising at least one coolant duct, i.e. a hollow attached to or disposed within the at least one ridge for transporting a coolant. The at least one ridge may further comprise coolant ports for providing coolant to the coolant duct. Further, the at least one ridge and/or the battery system cover may be made of a material with high thermal conductivity, preferably metal. In another preferred embodiment, a heat sink is arranged on an upper side of the battery system cover opposite to the at least one ridge. By these measures, the thermal mass of the cover and the ridges can be increased and heat can be effectively dissipated from the ejected gas.

In a preferred embodiment of the battery system according to the present invention each battery cell further comprises a positive terminal and a negative terminal and the vent hole of each battery cell is arranged at a distance from the positive terminal and the negative terminal. In other words any physical contact between the at least one ridge and the positive terminal or the negative terminal is avoided. Thus, there is no electrical connection between one of the positive terminal and the negative terminal and the at least one ridge and thus a short circuit between the terminals and the cover is avoided. Particularly preferred, the positive terminal and the negative terminal are arranged at a distance from each other in the second direction and the vent hole is arranged between the positive and the negative terminal.

According to a preferred embodiment of the present invention, the battery system further comprises a housing for accommodating the plurality of battery cells, wherein the battery system cover is configured to be attached to the housing. The housing preferably comprises a bottom wall that may be constituted by a ground plate of the battery system. The ground plate might comprise cooling means for cooling the battery cells disposed on the ground plate. The housing further comprises a pair of first lateral sidewalls facing each other and a pair of second lateral sidewall facing each other. The lateral sidewalls are attached to the ground plate and each first lateral sidewall is attached to two second lateral sidewalls and each second lateral sidewall is attached to two first lateral sidewalls. The at least one plurality of battery cells and further components of the battery system, e.g. a battery management unit or battery discharge unit, may be inserted into the housing via the open top surface of the housing. The battery system cover is configured to be attached to the housing for covering the open surface of the housing. At least one ridge of the cover may be aligned with respect to the vent holes as described above, while the battery system cover is attached to the housing.

Further preferred, at least one lateral sidewall enclosing the housing in the second direction comprises an exhaust opening for exhausting gas ejected from a vent hole and deflected from at least one ridge. In other words, an exhaust opening is provided in the direction into which the gas is deflected by the at least one ridge. Thus, reliable exhaust of the ejected gas from the housing is ensured.

### Brief Description of the Drawings

Features will become apparent to those of ordinary skill in the art by describing exemplary embodiments in detail with reference to the attached drawings in which:
- Fig. 1: illustrates a perspective view of a battery cell according to an embodiment;
- Fig. 2: illustrates a cross section of a battery cell according to an embodiment;
- Fig. 3: illustrates a schematic side view and a schematic top view of a battery system according to an embodiment;
- Fig. 4: illustrates a schematic side view of a battery system according to a first embodiment and a schematic bottom view of a cover of a battery system according to an embodiment;
- Fig. 5: illustrates a schematic side view of a battery system according to the prior art and a schematic bottom view of a cover of a battery system according to the prior art; and
- Fig. 6: illustrates a schematic side view of a battery system according to a second embodiment and a detailed view D of the guiding ridge area according to (A) a first version and (B) a second version.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention." Although the embodiments herein are described with various specific embodiments, it will be obvious for a person skilled in the art to practice the invention with modifications. All such modifications are deemed to be within the scope of the claims.

As used herein, the terms "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered around the value. In addition, the use of "may" when describing embodiments of the present invention refers to "one or more embodiments of the present invention." Herein, the terms "upper" and "lower" are defined according to the z-axis. For example, the upper cover is positioned at the upper part of the z-axis, whereas the lower cover is positioned at the lower part thereof.

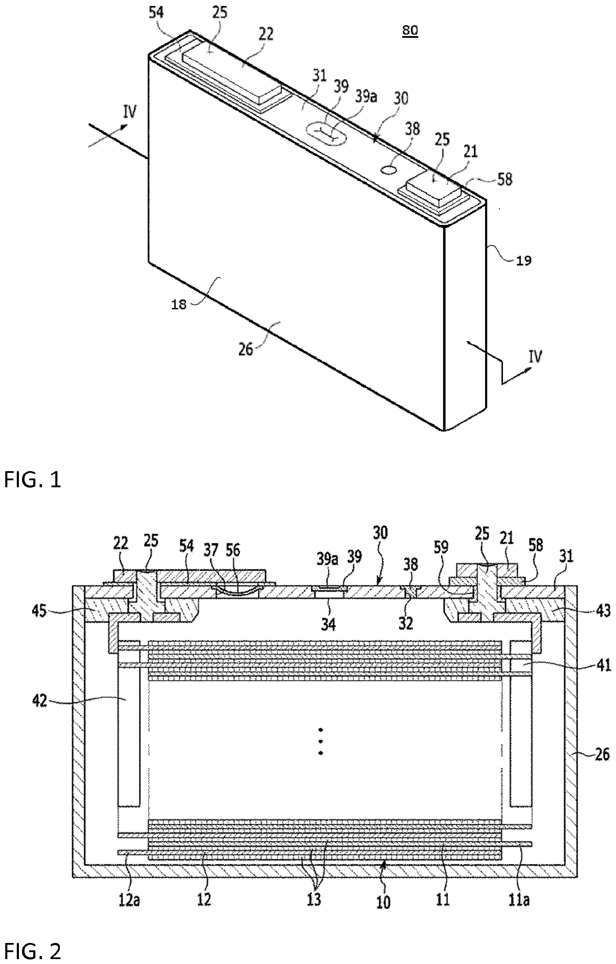

Fig. 1 is a perspective view illustrating a battery cell according to an exemplary embodiment and Fig. 2 is a cross-sectional view taken along the IV-IV line of Fig. 1.

As shown in Figs. 1 and 2, a battery cell 80 according to an embodiment may include an electrode assembly 10, and a case 26 for accommodating the electrode assembly 10, the case 26 containing an electrolyte. The battery cell 80 may also include a cap assembly 30 for sealing an opening of the case 26. The battery cell 80 will be described as a non-limiting example of a lithium ion secondary battery configured to have a prismatic shape.

The electrode assembly 10 may be formed as a jelly roll type of electrode assembly by spirally winding a positive electrode 11 and a negative electrode 12 with a separator 13 therebetween. The positive electrode 11 and the negative electrode 12 may respectively include coated regions of current collectors formed of a thin metal foil, on which an active material may be coated, and may respectively include positive and negative electrode uncoated regions 11a and 12a of the current collectors on which no active material is coated. As a non-limiting example, the coated region of the positive electrode 11 may be formed by coating a base material formed of a metal foil, such as an aluminum foil, with an active material, such as a transition metal oxide or the like. Also, the coated region of the negative electrode 12 may be formed by coating a base material formed of a metal foil, such as a copper or nickel foil, with an active material, such as carbon, graphite, or the like.

The positive electrode uncoated region 11a may be formed on one lateral end of the positive electrode 11 in a longitudinal direction of the positive electrode 11, and the negative electrode uncoated region 12a may be formed on one lateral end of the negative electrode 12 in a longitudinal direction of the negative electrode 12. The positive electrode uncoated region 11a and the negative electrode uncoated region 12a may be on sides that are opposite to each other with respect to the coated regions. Further, the separator 13 may include a plurality of separators, which may be spirally wound after the positive electrode 11, the negative electrode 12, and the separator 13 are alternately situated. The present invention is not limited thereto, and the electrode assembly 10 may be configured to have a structure including a plurality of sheets of the positive electrode 11, the separator 13, and the negative electrode 12 that are repeatedly stacked.

The electrode assembly 10 may be accommodated in the case 26 together with an electrolyte solution. The electrolyte solution may be made of a lithium salt, such as LiPF6 or LiBF4 with an organic solvent, such as EC, PC, DEC, EMC, or EMC. The electrolyte solution may be in a liquid, solid, or gel state. The case 26 may be configured to have a substantially cuboidal shape, and an opening may be formed at one side thereof. The case 26 may be formed of a metal, such as aluminum.

The case 26 may include a bottom surface having a substantially rectangular shape, and may include a pair of first lateral walls, that are wide side surfaces 18, 19, and a pair of second lateral walls connected vertically to end portions of the bottom surface, respectively, to form a space for accommodating the electrode assembly 10. The first lateral walls 18, 19 may face each other, and the second lateral walls may be positioned to face each other and may be connected to the first lateral walls 18, 19. A length of an edge at which the bottom surface and one of the first lateral walls 18, 19 are connected to each other may be longer than that of an edge at which the bottom surface and one of the second lateral walls are connected to each other. Preferably, adjacent first and second lateral walls enclose an angle of about 90°.

The cap assembly 30 may include a cap plate 31 for covering the opening of the case 26 by being bonded to the case 26, and may include a positive terminal 21 (first terminal) and a negative terminal 22 (second terminal), which are externally protruded from the cap plate 31 to be electrically connected to the positive electrode 11 and the negative electrode 12, respectively. The cap plate 31 may be configured to have a shape of a plate that may be extended in one direction, and that may be bonded to the opening of the case 26. The cap plate 31 may include an injection hole 32 and a vent hole 34 that communicate with an interior of the cap assembly 30. The injection hole 32 may be configured to allow injection of the electrolyte solution, and a sealing cap 38 may be mounted thereon or therein. Further, a vent member 39 including a notch 39a, which may be opened due to a predetermined pressure may be mounted to or in the vent hole 34.

The positive terminal 21 and the negative terminal 22 may be mounted to protrude upward from the cap plate 31. The positive terminal 21 may be electrically connected to the positive electrode 11 via a current collecting tab 41, and the negative terminal 22 may be electrically connected to the negative electrode 12 via a current collecting tab 42. A terminal connecting member 25 for electrically connecting the positive terminal 21 and the current collecting tab 41 may be mounted between the positive terminal 21 and the current collecting tab 41. The terminal connecting member 25 may be inserted into a hole formed at the positive terminal 21, such that a lower portion thereof may be welded to the current collecting tab 41.

A gasket 59 for sealing may be mounted between the terminal connecting member 25 and the cap plate 31, while being inserted into a hole through which the terminal connecting member 25 may extend. Further, a lower insulating member 43, into which the lower portion of the terminal connecting member 25 may be inserted, may be mounted under the cap plate 31. A connecting plate 58 for electrically connecting the positive terminal 21 and the cap plate 31 may be mounted between the positive terminal 21 and the cap plate 31. The terminal connecting member 25 may be inserted into the connecting plate 58. Accordingly, the cap plate 31 and the case 26 may be positively electrified.

Another terminal connecting member 25, for electrically connecting the negative terminal 22 and the current collecting tab 42 may be installed between the negative terminal 22 and the current collecting tab 42. The terminal connecting member 25 may be inserted into a hole formed at the negative terminal 22, such that an upper portion and a lower portion of the terminal connecting member 25 may be, respectively, welded to the negative terminal 22 and to the current collecting tab 42. A gasket for sealing, which is similar to the gasket 59, may be mounted between the negative terminal 22 and the cap plate 31, while being inserted into the hole through which the terminal connecting member 25 may extend. Further, a lower insulating member 45, which is for insulating the negative terminal 22 and the current collecting tab 42 from the cap plate 31, may be mounted under the cap plate 31.

An upper insulating member 54 for electrically insulating the negative terminal 22 and the cap plate 31 may be mounted between the negative terminal 22 and the cap plate 31. The terminal connecting member 25 may be inserted into a hole formed at the upper insulating member 54. The cap assembly 30 may include a short-circuiting hole 37, and a short-circuiting member 56 that may short-circuit the positive electrode 11 and the negative electrode 12 installed in the short-circuiting hole 37. The short-circuiting member 56 may be between the upper insulating member 54 and the cap plate 31, and the upper insulating member 54 may be configured to have a cutout that may be formed at a position corresponding to the short-circuiting member 56. The short-circuiting member 56 may overlap the negative terminal 22 exposed through the cutout, and may be separately located.

Further, the short-circuiting member 56 may be between the negative terminal 22 and the vent hole 34, and may be located closer to the negative terminal 22 than to the vent hole 34. The short-circuiting member 56 may include a convexly curved portion that curves toward the electrode assembly 10, and may include an edge portion that may be formed at an outside of the curved portion and fixed to the cap plate 31. The short-circuiting member 56 may be deformed to cause a short-circuit when an internal pressure of the battery cell 80 rises. In other words, the internal pressure of the battery cell 80 may rise when a gas is generated by an unwanted reaction in the battery cell 80. When the internal pressure of the battery cell 80 is increased to be higher than a level (e.g., a predetermined level), the curved portion may be deformed to be concavely curved toward an opposite direction, thereby causing the short-circuiting member 56 to contact the negative terminal 22 to cause a short-circuit.

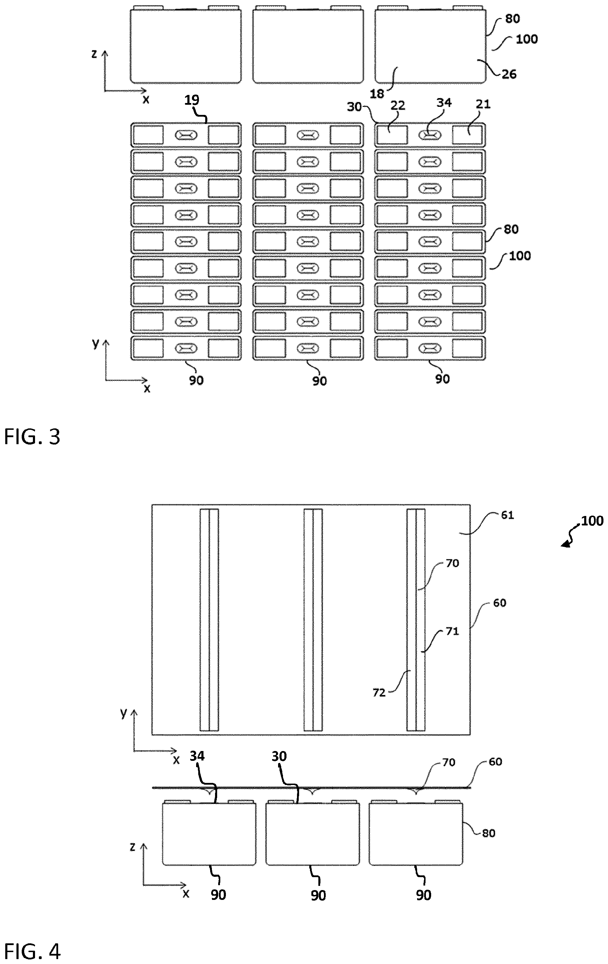

Referring to Figs. 3, 4 and 5, a battery system 100 includes a plurality of battery modules 90 that are spaced apart in a second direction, i.e. the x-direction. Each battery module 90 comprises a plurality of battery cells 80 arranged and aligned in a first direction, i.e. the y-direction. Each battery cell 80 is a prismatic (or rectangular) cell 80, comprising a case 26 and an electrode assembly (not shown) accommodated in the case 26. The case 26 is formed of aluminum and has a substantially cuboidal shape with an opening at its top for inserting the electrode assembly 10. The case 26 further has wide side surfaces 18, 19 facing each other.

The wide flat side surfaces 18, 19 of the cells 80 are stacked together to form a battery module 90. In other words, the prismatic battery cells 80 are arranged such that first lateral walls 18, 19 of adjacent battery cells 80 face each other and/or are in close contact with each other. Spacers (not shown) may be positioned between first lateral side walls 18, 19 of adjacent cells 80. The positive and negative electrode terminals 21 and 22 of neighboring battery cells 80 are electrically connected through a bus bar (not shown). The battery modules 90 may be used as a power source unit by electrically connecting the plurality of battery cells 80 as one bundle.

Each of the battery cells 80 comprises the vent hole 34 that is arranged in the cap assembly 30 of the battery cell 80 at a distance from the positive terminal 21 and the negative terminal 22. The vent holes 34 of a plurality of battery cells 80 aligned in the first direction are also arranged in the first direction.

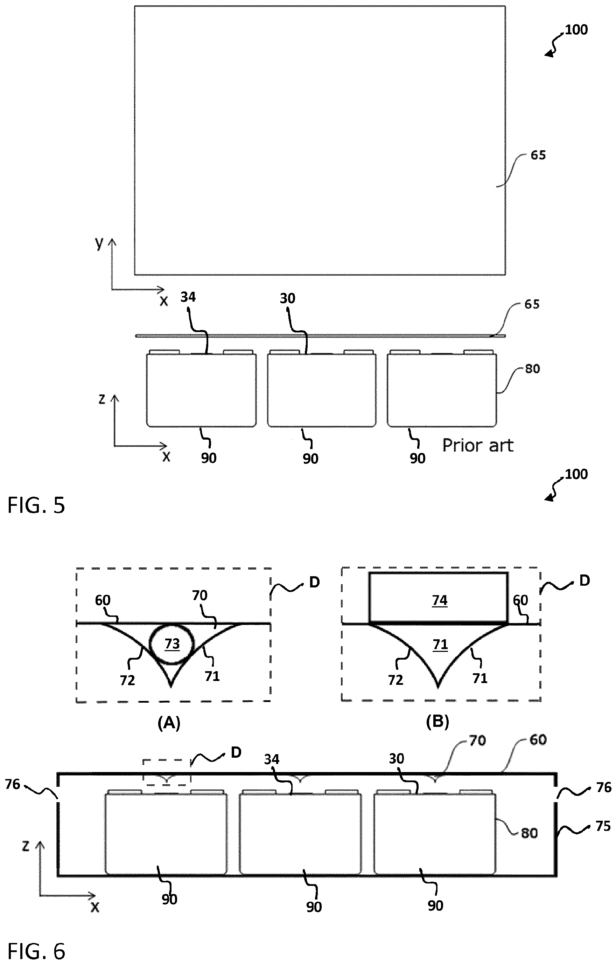

In the prior art battery system shown in Fig. 5 a prior art battery system cover 65 is arranged on top of the battery modules 90 such that a lower side of the prior art battery system cover 65 faces the cap assemblies 30 of the battery cells 80. If one of the battery cells 80 enters into thermal runaway a gas jet will be ejected from the vent hole 34 of the respective battery cell 80 at high velocity and high temperature. If the gas jet hits the prior art battery system cover 65 it is deflected uniformly in all directions in the x-y-plane. Thus, a significant amount of the gas jet is deflected towards adjacent battery cells 80 that are part of the same battery module 90 as the ejecting battery cell 80. These adjacent cells 80 already receive heat from the ejecting cell due to heat conduction and thus they are prone to enter into thermal runaway as well when receiving the heat from the deflected gas jet.

As shown in Fig. 4 in a battery system 100 according to a first embodiment of the present invention, a battery system cover 60 is arranged at the top of the battery modules 90 such that a lower side 61 of the battery system cover 60 faces the cap assemblies 30 of the battery cells 80. The battery system cover 60 comprises a plurality of ridges 70 that are arranged apart in the second direction, i.e. the x-direction. Each of the ridges 70 extends in a first direction, i.e. in the y-direction. In other words the length extension of each of the ridges is oriented in the y-direction. Each ridge 70 is aligned with the vent holes 34 of one battery module 90, i.e. a plurality of arranged battery cells 80. Each ridge 70 is arranged over the vent holes 34 of a corresponding battery module 90 at a distance in a third direction, i.e. the z-direction, from the cap assemblies 30 of the battery cells 80 of the respective battery module 90.

Each of the ridges 70 comprises a substantially triangular cross section in the second direction, as shown in Fig. 4. The tip, i.e. the undermost corner, of a substantially triangular ridge 70 is aligned with the vent holes 34 below and at a distance to the vent holes 34 below.

Each ridge 70 comprises a first ridge flank 71 extending from the tip to a plane section of the battery system cover 60 and a second ridge flank 72 extending from the tip to a plane section of the battery system cover 60. The first ridge flank 71 and the second ridge flank 72 meet in the tip of the ridge 70 and enclose an angle. Each of the first ridge flank 71 and the second ridge flank 72 comprise a concave shape. The first ridge flank 71 deflects a gas jet ejected from a vent hole 34 arranged below into the second direction, i.e. in the x-direction, and the second ridge flank 72 deflects the gas ejected from a vent hole 34 below in a direction opposite to the x-direction.

Thus, any gas jet ejected from a vent hole 34 of a battery cell 80 in an abnormal operation condition is parted at the respective ridge 70. Each part of the deflected gas jet is directed towards a respective neighboring battery module 90 or to a lateral sidewall of a housing (not shown) of the battery system 100. Thus, the gas jet and the heat transported with it are distributed away from adjacent battery cells 80 that are within the same battery module 90 as the ejecting battery cell 80. These adjacent battery cells already receive heat from the ejecting cell 80 due to heat conduction and are thus particularly prone to enter into thermal runaway. By distributing the heat of an ejected gas jet over a wider area and particularly towards neighboring battery modules 90 of the battery system 100 the danger of thermal runaway propagation is reduced. The gas jet ejected from a battery cell 80 of an outermost battery module 90 is partially deflected towards the battery system housing. In order to ensure sufficient exhaust of the ejected gas, the housing comprises exhaust openings at least in the lateral sidewall towards which the ejected gas jet is partially deflected.

Figure 5 shows a battery system 100 according to a second embodiment of the present invention and a detailed view of the guiding ridge 70 area according to (A) a first version and (B) a second version. The battery system 100 according to the second embodiment also comprises a battery system cover 60 that is arranged at the top of the battery modules 90 such that a lower side 61 of the battery system cover 60 faces the cap assemblies 30 of the battery cells 80. The battery system cover 60 comprises a plurality of ridges 70 that are arranged apart in the second direction, i.e. the x-direction. Each of the ridges 70 extends in a first direction, i.e. in the y-direction. Each ridge 70 is aligned with the vent holes 34 of one battery module 90, i.e. a plurality of arranged battery cells 80. Each ridge 70 is arranged over the vent holes 34 of a corresponding battery module 90 at a distance in the z-direction from the cap assemblies 30 of the battery cells 80 of the respective battery module 90.

Each of the ridges 70 comprises a substantially triangular cross section in the second direction. The tip, i.e. the undermost corner, of a substantially triangular ridge 70 is aligned with the vent holes 34 below and at a distance to the vent holes 34 below. Each ridge 70 comprises a first ridge flank 71 extending from the tip to a plane section of the battery system cover 60 and a second ridge flank 72 extending from the tip to a plane section of the battery system cover 60. The first ridge flank 71 and the second ridge flank 72 meet in the tip of the ridge 70 and enclose an angle. Each of the first ridge flank 71 and the second ridge flank 72 comprise a concave shape. The first ridge flank 71 deflects a gas jet ejected from a vent hole 34 arranged below into the second direction, i.e. in the x-direction, and the second ridge flank 72 deflects the gas ejected from a vent hole 34 below in a direction opposite to the x-direction. In the battery system 100 according to the second embodiment, the at least one ridge is configured to cool gas that ejected from the vent holes 34.

As shown in the detailed schematic view of the Detail D according to a first version (A), the ridge 70 comprises a coolant duct 73 that is arranged within the ridge 70 and extends within the ridge 70. In other words, in each ridge 70 a coolant duct 73 extends in the y-direction and is thus also aligned with the vent holes 34 of one battery module 90. The coolant duct 73 is enclosed within the first ridge flank 71, the second ridge flank 72 and a section of the battery system cover 60. The coolant duct 73 may be a hollow within a solid ridge 70 and/or may be a coolant pipe that is molded within the ridge 70 of battery system cover 60. The coolant duct 73 terminates in a first coolant port (not shown) at one of its terminal ends (not shown) and terminates in a second coolant port (not shown) at the other one of its terminal ends (not shown). The first coolant port (not shown) and the second coolant port (not shown) of each coolant duct 73 is configured to be fluidly connected to an external coolant circuit (not shown).

As shown in the detailed schematic view of the Detail D according to a first version (B), the ridge 70 a heat sink 74 is arranged on an upper side of the battery system cover 60 opposite to the at least one ridge 70. According to this version, the ridge 70 and the battery system cover 60 are made of a material with high thermal conductivity, preferably aluminum. Thus, heat is transferred efficiently from the emitted gas jet via the battery cover 60 to the heat sink 74 and is dissipated in the heat sink 74. According to preferred embodiments, the heat sink 74 may comprise an enlarged surface area, i.e. by comprising at least one corrugated surface or by comprising a plurality of ridges that are arranged in at least one surface.

Alternatively or additionally, the heat sink 74 might comprise at least one coolant duct (not shown) that is arranged within the heat sink 74. The coolant duct in the heat sink 74 may be configured to be connected to the same external coolant circuit as the coolant duct 73 of version (A) of the second embodiment of the present invention.

As further shown in Fig. 5, the battery system 100 further comprises a housing 75 for accommodating the battery modules 90, i.e. the plurality of battery cells 80. According to the shown embodiment, the battery system cover 60 according to the present invention forms a part of the housing 74, i.e. closes a top opening of the housing 74. The housing 74 further comprises a base plate that is connected to side walls of the housing. Two side walls of the housing 74 that are facing each other, each comprise an exhaust opening 76 for exhausting gas ejected that is ejected from a vent hole 34 and is deflected from at least one ridge 70.

## Claims

1. A battery system (100), comprising:
a plurality of battery modules (90) arranged apart from each other in a second direction (x), each comprising a plurality of aligned battery cells (80) arranged in a first direction (y), each of the battery cells (80) comprising an electrode assembly (10) accommodated in a battery case (26), a cap assembly (30) placed on the battery case (26) and a vent hole (34) within the cap assembly (30); and
a battery system cover (60) for covering the battery modules (90);
wherein the battery system cover (60) comprises a plurality of ridges (70) disposed on a lower side (61) of the battery system cover (60) facing the plurality of battery modules (90) and being spaced apart from each other in the second direction (x),
wherein each of the plurality of ridges (70) extends in the first direction (y) and is aligned with the vent holes (34) of one of the plurality of battery module (90), and
wherein each of the plurality of ridges (70) is configured for deflecting gas ejected from a vent hole (34) of a battery cell (80) of a first one of the battery modules (90) in a second direction (x) substantially perpendicular to the first direction (y) and towards an adjacent second one of the battery modules (90).

2. A battery system (100) according to claim 1, **characterized in that** the vent holes (34) of the plurality of aligned battery cells (80) are aligned in the first direction (y).

3. A battery system (100) according to claim 1 or 2, **characterized in that** the ridges (70) are arranged at a distance from the vent holes (34) in a third direction (z) substantially perpendicular to the first direction (y) and the second direction (x).

4. A battery system (100) according to any one of the preceding claims, **characterized in that** each ridge (70) is tapered towards the battery cells (80) in a cross section along the second direction (x).

5. A battery system (100) according to any one of the preceding claims, **characterized in that** each ridge (70) comprises a first ridge flank (71) and a second ridge flank (72), wherein the first ridge flank (71) is configured for deflecting gas ejected from a vent hole (34) in the second direction (x), and
wherein the second ridge flank (72) is configured for deflecting gas ejected from a vent hole (34) in a direction opposite to the second direction (x).

6. A battery system (100) according to any one of the preceding claims, **characterized in that** each ridge (70) comprises a substantially triangular shape in a cross section along the second direction (x).

7. A battery system (100) according to claim 5 **characterized in that** the first ridge flank (71) and the second ridge flank (72) comprise a concave shape in a cross section along the second direction (x).

8. A battery system (100) according to any one of the preceding claims, **characterized in that** each ridge (70) is configured to cool gas ejected from a vent hole (34).

9. A battery system (100) according to claim 8, **characterized in that** each ridge (70) comprises at least one coolant duct (73).

10. A battery system (100) according to claim 8 or 9, **characterized in that** the the ridges (70) and/or the battery system cover (60) are made of a material with high thermal conductivity, and
a heat sink (74) is arranged on an upper side of the battery system cover (60) opposite to at least one ridge (70).

11. A battery system (100) according to any one of the preceding claims, **characterized in that** each battery cell (80) further comprises a positive terminal (21) and a negative terminal (22) and **in that** the vent hole (34) of each battery cell (80) is arranged at a distance from the positive terminal (21) and the negative terminal (22).

12. A battery system (100) according to claim 11, **characterized in that** the positive terminal (21) and the negative terminal (22) are arranged at a distance from each other in the second direction (x), and **in that** the vent hole (34) is arranged between the positive terminal (21) and the negative terminal (22).

13. A battery system (100) according to any one of the preceding claims, further comprising a housing (75) for accommodating the plurality of battery cells (80),
wherein the battery system cover (60) is configured to be attached to the housing.

14. A battery system (100) according to claim 13, **characterized in that** at least one lateral side wall enclosing the housing (75) in the second direction (x) comprises an exhaust opening (76) for exhausting gas ejected from a vent hole (34) and deflected from at least one ridge (70).

## Patentansprüche

1. Ein Batteriesystem (100), aufweisend:
eine Vielzahl von Batteriemodulen (90), die voneinander beabstandet in einer zweiten Richtung (x) angeordnet sind, wobei jedes eine Vielzahl aufeinander ausgerichteter Batteriezellen (80), die in einer ersten Richtung (y) angeordnet sind, aufweist, wobei jede der Batteriezellen (80) eine Elektrodenanordnung (10), die in einem Batteriegehäuse (26) aufgenommen ist, eine Abdeckanordnung (30), die auf dem Batteriegehäuse (26) angeordnet ist, und ein Lüftungsloch (34) in der Abdeckanordnung (30) aufweist; und
eine Batteriesystemabdeckung (60) zum Abdecken der Batteriemodule (90);
wobei die Batteriesystemabdeckung (60) eine Vielzahl von Rippen (70), die auf einer Unterseite (61) der Batteriesystemabdeckung (60) angeordnet sind und der Vielzahl der Batteriemodule (90) zugewandt sind und in der zweiten Richtung (x) voneinander beabstandet sind, aufweist,
wobei sich jede der Vielzahl der Rippen (70) in die erste Richtung (y) erstreckt und auf die Lüftungslöcher (34) eines der Vielzahl der Batteriemodule (90) ausgerichtet ist, und
wobei jede der Vielzahl der Rippen (70) konfiguriert ist, um Gas, das von einem Lüftungsloch (34) einer Batteriezelle (80) eines ersten der Batteriemodule (90) ausgestoßen wird, in eine zweite Richtung (y), die im Wesentlichen perpendikulär zur ersten Richtung (y) ist, und zu einem benachbarten zweiten der Batteriemodule (90) hin abzulenken.

2. Ein Batteriesystem (100) nach Anspruch 1, **dadurch gekennzeichnet, dass** die Lüftungslöcher (34) der Vielzahl aufeinander ausgerichteter Batteriezellen (80) in der ersten Richtung (y) ausgerichtet sind.

3. Ein Batteriesystem nach Anspruch 1 oder 2, **dadurch gekennzeichnet, dass** die Rippen (70) in einem Abstand von den Lüftungslöchern (34) in einer dritten Richtung (z), die im Wesentlichen perpendikulär zur ersten Richtung (y) und zur zweiten Richtung (x) ist, angeordnet sind.

4. Ein Batteriesystem (100) nach einem der vorhergehenden Ansprüche, **dadurch gekennzeichnet, dass** sich jede Rippe (70) in einem Querschnitt entlang der zweiten Richtung (x) zu den Batteriezellen (80) hin verjüngt.

5. Ein Batteriesystem (100) nach einem der vorhergehenden Ansprüche, **dadurch gekennzeichnet, dass** jede Rippe (70) eine erste Rippenflanke (71) und eine zweite Rippenflanke (72) aufweist,
wobei die erste Rippenflanke (71) konfiguriert ist, um Gas, das von einem Lüftungsloch (34) ausgestoßen wird, in die zweite Richtung (x) abzulenken, und
wobei die zweite Rippenflanke (72) konfiguriert ist, um Gas, das von einem Lüftungsloch (34) ausgestoßen wird, in eine Richtung entgegengesetzt zur zweiten Richtung (x) abzulenken.

6. Ein Batteriesystem (100) nach einem der vorhergehenden Ansprüche, **dadurch gekennzeichnet, dass** jede Rippe (70) eine im Wesentlichen dreieckige Form in einem Querschnitt entlang der zweiten Richtung (x) aufweist.

7. Ein Batteriesystem (100) nach Anspruch 5, **dadurch gekennzeichnet, dass** die erste Rippenflanke (71) und die zweite Rippenflanke (72) eine konkave Form in einem Querschnitt entlang der zweiten Richtung (x) aufweisen.

8. Ein Batteriesystem (100) nach einem der vorhergehenden Ansprüche, **dadurch gekennzeichnet, dass** jede Rippe (70) konfiguriert ist, um Gas, das von einem Lüftungsloch (34) ausgestoßen wird, zu kühlen.

9. Ein Batteriesystem (100) nach Anspruch 8, **dadurch gekennzeichnet, dass** jede Rippe (70) zumindest einen Kühlmittelkanal (73) aufweist.

10. Ein Batteriesystem (100) nach Anspruch 8 oder 9, **dadurch gekennzeichnet, dass**
die Rippen (70) und/oder die Batteriesystemabdeckung (60) aus einem Material mit hoher Wärmeleitfähigkeit hergestellt sind, und
ein Kühlkörper (74) auf einer Oberseite der Batteriesystemabdeckung (60) gegenüber zumindest einer Rippe (70) angeordnet ist.

11. Ein Batteriesystem (100) nach einem der vorhergehenden Ansprüche, **dadurch gekennzeichnet, dass** jede Batteriezelle (80) ferner einen positiven Anschluss (21) und einen negativen Anschluss (22) aufweist und dadurch, dass das Lüftungsloch (34) jeder Batteriezelle (80) in einem Abstand vom positiven Anschluss (21) und vom negativen Anschluss (22) angeordnet ist.

12. Ein Batteriesystem (100) nach Anspruch 11, **dadurch gekennzeichnet, dass** der positive Anschluss (21) und der negative Anschluss (22) in einem Abstand voneinander in der zweiten Richtung (x) angeordnet sind und dadurch, dass das Lüftungsloch (34) zwischen dem positiven Anschluss (21) und dem negativen Anschluss (22) angeordnet ist.

13. Ein Batteriesystem (100) nach einem der vorhergehenden Ansprüche, ferner aufweisend ein Gehäuse (75) zum Aufnehmen der Vielzahl der Batteriezellen (80),
wobei die Batteriesystemabdeckung (60) konfiguriert ist, um am Gehäuse befestigt zu sein.

14. Ein Batteriesystem (100) nach Anspruch 13, **dadurch gekennzeichnet, dass** zumindest eine laterale Seitenwand, die das Gehäuse (75) in der zweiten Richtung (x) umschließt, eine Auslassöffnung (76) zum Auslassen von Gas, das von einem Lüftungsloch (34) ausgestoßen wird und von zumindest einer Rippe (70) abgelenkt wird, aufweist.

## Revendications

1. Système de batterie (100) comprenant :
une pluralité de modules de batterie (90) agencés espacés les uns des autres dans une deuxième direction (x), chacun comprenant une pluralité d'éléments de batterie alignés (80) agencés dans une première direction (y), chacun des éléments de batterie (80) comprenant un ensemble d'électrodes (10) reçu dans un boîtier de batterie (26), un ensemble capuchon (30) placé sur le boîtier de batterie (26) et un trou d'aération (34) à l'intérieur de l'ensemble capuchon (30) ; et
un couvercle de système de batterie (60) pour recouvrir les modules de batterie (90) ;
dans lequel le couvercle de système de batterie (60) comprend une pluralité de crêtes (70) disposées sur un côté inférieur (61) du couvercle de système de batterie (60) faisant face à la pluralité de modules de batterie (90) et étant espacées l'une de l'autre dans la deuxième direction (x),
dans lequel chacune de la pluralité de crêtes (70) s'étend dans la première direction (y) et est alignée avec les trous d'aération (34) de l'un de la pluralité de modules de batterie (90), et
dans lequel chacune de la pluralité de crêtes (70) est configurée pour dévier le gaz éjecté d'un trou d'aération (34) d'un élément de batterie (80) d'un premier module des modules de batterie (90) dans une deuxième direction (x) sensiblement perpendiculaire à la première direction (y) et vers un deuxième module adjacent des modules de batterie (90).

2. Système de batterie (100) selon la revendication 1, **caractérisé en ce que** les trous d'aération (34) de la pluralité d'éléments de batterie alignés (80) sont alignés dans la première direction (y).

3. Système de batterie (100) selon la revendication 1 ou 2, **caractérisé en ce que** les crêtes (70) sont agencées à une certaine distance des trous d'aération (34) dans une troisième direction (z) sensiblement perpendiculaire à la première direction (y) et à la deuxième direction (x).

4. Système de batterie (100) selon l'une quelconque des revendications précédentes, **caractérisé en ce que** chaque crête (70) est effilée vers les éléments de batterie (80) en section transversale le long de la deuxième direction (x).

5. Système de batterie (100) selon l'une quelconque des revendications précédentes, **caractérisé en ce que** chaque crête (70) comprend un premier flanc de crête (71) et un deuxième flanc de crête (72),
dans lequel le premier flanc de crête (71) est configuré pour dévier le gaz éjecté d'un trou d'aération (34) dans la deuxième direction (x), et
dans lequel le deuxième flanc de crête (72) est configuré pour dévier le gaz éjecté d'un trou d'aération (34) dans une direction opposée à la deuxième direction (x).

6. Système de batterie (100) selon l'une quelconque des revendications précédentes, **caractérisé en ce que** chaque crête (70) comprend une forme sensiblement triangulaire en section transversale le long de la deuxième direction (x).

7. Système de batterie (100) selon la revendication 5, **caractérisé en ce que** le premier flanc de crête (71) et le deuxième flanc de crête (72) comprennent une forme concave en section transversale le long de la deuxième direction (x).

8. Système de batterie (100) selon l'une quelconque des revendications précédentes, **caractérisé en ce que** chaque crête (70) est configurée pour refroidir le gaz éjecté d'un trou d'aération (34).

9. Système de batterie (100) selon la revendication 8, **caractérisé en ce que** chaque crête (70) comprend au moins un conduit de liquide de refroidissement (73).

10. Système de batterie (100) selon la revendication 8 ou 9, **caractérisé en ce que** les crêtes (70) et/ou le couvercle de système de batterie (60) est/sont réalisé (es) en un matériau à haute conductivité thermique, et
un puits thermique (74) est agencé sur un côté supérieur du couvercle de système de batterie (60) opposé à au moins une crête (70).

11. Système de batterie (100) selon l'une quelconque des revendications précédentes, **caractérisé en ce que** chaque élément de batterie (80) comprend en outre une borne positive (21) et une borne négative (22) et **en ce que** le trou d'aération (34) de chaque cellule de batterie (80) est agencé à une certaine distance de la borne positive (21) et de la borne négative (22).

12. Système de batterie (100) selon la revendication 11, **caractérisé en ce que** la borne positive (21) et la borne négative (22) sont agencées à une certaine distance l'une de l'autre dans la deuxième direction (x), et **en ce que** le trou d'aération (34) est agencé entre la borne positive (21) et la borne négative (22).

13. Système de batterie (100) selon l'une quelconque des revendications précédentes, comprenant en outre un logement (75) pour recevoir la pluralité d'éléments de batterie (80),
dans lequel le couvercle de système de batterie (60) est configuré pour être attaché au logement.

14. Système de batterie (100) selon la revendication 13, **caractérisé en ce qu'**au moins une paroi latérale renfermant le logement (75) dans la deuxième direction (x) comprend une ouverture d'échappement (76) pour évacuer le gaz éjecté d'un trou d'aération (34) et dévié d'au moins une crête (70).
